# EUROPEAN PATENT APPLICATION

(11) **EP 2 946 912 A1**
(43) Date of publication of application: **25.11.2015**
(21) Application number: 14275125.4
(22) Date of filing: 21.05.2014
(51) Int. Cl.: B29C 70/56, B29C 70/30, B82Y 30/00

(54) **Additive manufacture of composite materials**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Apparatus and a method of forming a composite component (8) by additive layer manufacturing are provided. The method includes the steps of providing an elongate tape (2) of carbon nanotubes (CNTs), applying stretching force to the tape (2) whereby to align the carbon nanotubes to the tape and form an aligned tape (27), impregnating the tape (27) with matrix material (40, 48, 50), forming the aligned tape (27) into portions (43) of required size and transferring the portions as required to a component build location whereby to form the component (8), layer by layer.

## Description

This invention relates to the additive manufacture (AM) of composite materials reinforced with structural fibres or particulates.

AM of composites is currently only suitable for those composites limited in performance by way of usage, temperature, strength or stiffness, such as thermoplastic polymers like nylons and those with a low volume fraction of discontinuous/particulate reinforcements. This limits their usage to low performance structures and non-safety critical applications. It is, however, possible to make metal AM parts that meet such structural and safety critical part requirements

Manufacture of conventional polymer composite laminates using high performance fibres involves laying up long reinforcing fibres in a plastics matrix material. Whereas short fibre or particulate reinforced AM materials are available, such materials are not available with any preferential alignment of the fibres or particulates, which would allow increased directional performance. The incorporation of long fibres, for example, carbon or glass fibres, in the AM process is problematic.

It is an object of the invention to address at least some of these shortfalls and to enable net-shape manufacture of higher performance composites.

According to one aspect of the present invention there is provided a method of forming a composite component by additive layer manufacturing, the method including the steps of providing an elongate tape of carbon nanotubes (CNTs), applying stretching force to the tape whereby to align the carbon nanotubes to the tape and form an aligned tape, impregnating the tape with matrix material, forming the aligned tape into portions of required size and transferring the portions as required to a component build location whereby to form the component, layer by layer.

The concept builds on the recent developments enabling alignment of carbon nanotube arrays in fine unidirectional 2D planes. These arrays can be laminated or consolidated into high strength or stiffness composite laminates with properties exceeding those of conventional aerospace grade composites, for example, 8552/IM7-Hexcel.

The present invention aims to attain AM by constructing a conveyor process delivering fine tapes of aligned CNT (typically 1-10 mm wide and of varying lengths) which may be assembled and consolidated in-situ to build a tool-less composite component. The width of the tape may be selected according to need. For example, a component with no narrow features, like thin walled sections, or small, intricate features such as apertures with narrow border areas may allow wider tapes to be used. Whereas a component with such features or sections may require a tape in the narrower range in order to obtain the necessary degree of manufacturing precision.

AM processes are those depositing material as and where it is required, whether in powder, liquid or solid form. An example of this is Fused Deposition Modelling (FDM). Here the material is heated prior to deposition and it adheres to and consolidates with the substrate or previous layer of material when it cools. Alternatively, energy (e.g. thermal or ultraviolet) may be provided, once the material is deposited, and this causes the deposited material to adhere to and consolidate with the substrate. Another type of AM process is the selective consolidation process, in this case a layer of material is deposited, and then a selective region of the material is consolidated. Consolidation can be either by applying radiation (e.g. thermal or ultraviolet), or by an adhesive. Powder bed or stereo lithography are examples of AM processes using selective consolidation.

The CNT source material can be provided by different methods, with varying degrees of scalability. Suitable CNT source materials may include vapour catalysed veils, spun forest arrays and solution-produced bucky-paper, comprising an array of CNTs, forming a 2D paper-like sheet. The CNT source will be represented by the word "tape" which, as used herein, is to be understood to include the above CNT source materials and any suitable elongate lengths of CNT material, whether matted, woven or otherwise, and also rovings or yarns which may not be flat in cross section.

In order to attain the required level of CNT alignment in the tape, the tape may be progressively stretched in the range of 10-50% strain over the original length. Stretching is achieved through the application of a controlled stretching force in a direction which will generally be longitudinally of the elongate tape. Investigations indicate that optimum alignment can be attained with approximately 40% of even stretch. A challenge which the inventors have had to overcome is to achieve even straining without localised necking in the tape. The best technique found was to use a series of double rollers. Traction may be provided either by pinching the tape between counter-rotating rollers or by friction, from wrapping the tape around one or more rollers.

Differential speed between successive rollers or sets of rollers is used to attain the target strains. The level of stretch between each successive roller or set of rollers may be controlled to result in 5-10% strain. Consequently, obtaining a target stretch of 40%, for example, requires 4 to 8 roller stations. The stretching strain rate is also critical and should be controlled in the range of 1x10⁻³ to 1x10⁻² per second. The rollers may be made from smooth and low surface energy materials such as low coefficient of friction polymers or PTFE. In some arrangements, use of a soft elastomeric roller surface material may be advantageous and the roller size may be increased.

In order for the tape to achieve uniform alignment it may be necessary to employ a secondary medium to lubricate the dry tape. This may be a volatile solvent, for example, acetone or IPA or even water, in which case the continuous alignment process needs to allow for a dry-off step before the resin is applied. Alternatively, the lubrication may be via impregnation with a liquid resin, for example, epoxy or polyester, or solid thermoplastic resin, which may later form a matrix in the additively manufactured composite component. In this case, after the impregnated resin has acted as the lubricant, it may need to be further activated, through heat or a chemical catalyst, to undergo a cure or re-melting for the consolidation process. As a further alternative, the lubricating agent may be an oil or low molecular weight organic liquid that may be washed off the CNT aligned tape before impregnation with composite matrix resin.

Alternatively, the longitudinal strain may be attained through use of a double vacuum diaphragm technique whereby the tape is retained within a first vacuum bag, which in turn forms a sealed bag over a curved tool. Formation of vacuum in a second bag stretches the bagging film over the curved tool, thereby applying tensile strain to the first bag and its contents. Similarly, stretching may be obtained by temporary bonding onto an elastomeric backing strip, whereby uniform strain applied to the backing strip promotes even stretch in the CNT tape.

The CNT tape used with the roller stretching arrangement may be fed from a continuous semi-infinite spool. However it is possible to run the process with considerably shorter lengths of tape, down to perhaps 20cm in length. Where longer lengths of tape are not available, it is possible for shorter lengths of tape to be joined or spliced to create longer lengths, to enable an efficient continuous process line. In such cases the joint lines may be marked out and may be excluded from use in later stages of the additive manufacturing process.

The width of tape may be typically controlled in the range of 0.5-5 mm. The tape's areal weight may be in the range of 2-30 grams/sq m and more preferably in the range of 3-15 grams/sq m.

If the tape is in the form of a yarn, of nominally circular cross section, the yarn may be in the range of 2-50 Tex (i.e. grams per Km) and more preferably 5-10 Tex.

Upon leaving the alignment module the aligned tape may be surface treated to impart increased covalent functionality or hydrophilic characteristics to enhance CNT/matrix interaction in order to improve the properties of the resulting composite material.

The tape then enters a resin impregnator unit where resin may be added in the form of a liquid, slurry, spray or dry powder. The impregnated tape may then be deposited as a layer on a substrate or upon a prior layer, through a nozzle applicator as part of an AM build process.

The resulting pre-impregnated fibre tape may achieve fibre (CNT) weight fractions in the range of 10-60 wt% CNT, delivering increased reinforcement efficiency from that presently known.

According to a further aspect of the invention which may be suitable for powder bed or other selective consolidation additive manufacturing techniques, following fabrication of the impregnated tape emerging from the impregnator/consolidator/feeder, the tape is segmented by cutting, chopping or otherwise into particulates for further processing. Micromechanical calculations suggest that aligned CNT arrays in the range of 10 to 200 microns will provide substantial and increasing reinforcement effects. The pre-impregnated aligned tape may be chopped into fine aligned particles in or above the above range using a guillotine or milling or contactless process. It is possible that the segmentation process may be carried out in multiple stages, for example, ∼5 mm long guillotined pieces processed to a finer particle size using milling or cryo-milling.

The deposition direction of the tape may be controlled to enable addition of any in-plane direction, e.g. to achieve a cross ply or quasi-isotropic lamination lay-up. For example, fibre alignment in the directions 0°, ±30°, ±45°, ±60°, 90° is often used, in various high-strength structures but any chosen set of directions may be adopted, according to the nature of the invention. Out-of-plane orientations, as required, may also be achieved, using the method of the invention, as explained below.

Thus, the example of a work piece in the shape of a cube may be used. Laying the tapes on top of each other on the X-Y plane would mean that all the load carrying fibres (or CNT filaments) would be in the X-Y plane. In order to get some filaments aligned in the Z direction, the sides of the component may be clad with tape layers during the build. When a core of the component is partially built up with successive X-Y plies, either it or the applicator nozzle may be rotated to allow the sides of the component to be clad with tape. Once sufficient Z-plane tape build-up has been achieved, the component build may then revert back to the X-Y plane. This alternating process may continue for as long as the component design dictates.

As an alternative, a secondary deposition nozzle may also be deployed to provide disposable supporting structure, or "scaffold" structure, for any component overhangs. This way Z-oriented plies may be laid up on a support structure which can be removed at the end of the build. This is a known practice in 3D printing where any major overhangs in the component are printed on top of a strategically printed scaffold. The scaffold is made from a cheaper and easily machinable or soluble material.

The added resin may be a thermoplastic, e.g. nylon, ABS, PC, PPS. More preferably, for high strength use, it will be a thermoset, for example, epoxy, BMI or polyester. In the case of thermoplastics, a melting heater control may be incorporated in the nozzle, similar to that used in fused deposition modelling techniques. In the case of thermosets, an external curing source, for example, an ultraviolet or infrared source or a laser may be used to cure or partially cure the deposition layers.

With the process of the invention it is possible to selectively deposit conductive patterns in the 3D structure of the component to impart additional functionality such as de-icing heater tracks, integrated strain sensors, integrated antennae, frequency selective surfaces or selective electromagnetic/radar absorbing layers. To expand the range of such functionality, the aligned tapes may be additionally metallised, for example, by the application of a metal particulate loaded binder or by an electrochemical process.

Multiple deposition heads may be used, with each head providing fibres with different functionalities. Thus, the surface treatment unit, illustrated, may be replaced by a functionalization unit, which could then additionally be used for surface treatment or application of secondary materials such as metallic coatings for, say, sensing applications.

Examples for such high performance composites produced using net-shape AM include aircraft structural components such as wing box ribs, stringers, brackets or structural sub-assemblies; wing control surfaces, for example, slats, flaps and spoilers; semi-structural components such as access panels or avionics packages. It is noted that the size and scale of such articles may be much smaller and miniaturised for unmanned vehicle applications.

Further applications may include manufacture of space frames or geodesic composite structures when a series of internal struts, fins or cell structures may be optimally designed to provide tailored load paths in a weight efficient architecture. Numerical techniques are often employed to attain topologically optimised load paths for strength, stiffness or damage tolerance.

According to another aspect of the invention, once the aligned tape is produced, it is deposited on the substrate or work piece using laser ablation.

In a first method, a laser ablative process called LIFT (Laser Induced Forward Transfer) is used. LIFT is a known process. For this process, the aligned tape to be deposited is attached to a backing tape to form a supported tape. The LIFT process is enabled by a super-heated vapour being generated by the laser between the aligned tape and the backing tape. In most cases sufficient vapour is generated from contaminants and other coatings that may be between the aligned tape and the backing tape (such as an adhesive layer). However, if necessary, an interface between the backing tape and the aligned tape can be deliberately seeded with materials to improve laser absorption and hence improve the generation of vapour to enable the LIFT process.

The supported tape is placed in close proximity to the substrate, for example in the range of 10s of microns to 500 microns, with the aligned tape facing the substrate. A laser pulse is then discharged to irradiate a small region of the supported tape. In the irradiated region, the laser pulse causes a portion of the aligned tape to be lifted off the backing tape and projected onto the substrate. The process is then repeated with the laser being directed at a fresh portion of the tape until all usable aligned tape in a given region thereof has been used up and a fresh region is exposed to the laser to be progressively projected onto the substrate.

Relative movement is effected between the laser and the tape and between the tape and the work piece, during the tape deposition process, in order to allow the laser to irradiate different portions of the tape and for different portions of the tape to be positioned over differing portions of the work piece. These relative motions may be organised in the most suitable way for the particular conditions of a particular work piece and particular ALM tooling. It is generally envisaged that 100% of the aligned tape would be deposited, save for particular geometric arrangements of work piece dictating otherwise, like certain corner regions, for example.

A deposition head of the apparatus, for use with aligned tape, may include a feed spool of tape, feeding supported tape past a deposition region to a collection spool for the backing layer and any remaining aligned tape attached to the backing layer. The head may also include a pulse laser and means to move the direction of laser focus with respect to the tape. The work piece may also be movable with respect to the aligned tape, for example, laterally and/or longitudinally of the tape and rotationally with respect to the tape.

In a second method, no backing tape is used. Instead, the aligned tape is placed directly on the substrate (or close to it); it is then irradiated with laser pulses, causing irradiated parts of the tape to be cut and deposited on the substrate. In order to allow for the aligned tape losing much of its material, following deposition of irradiated regions of the tape, the aligned tape may be pushed as well as well as pulled across an irradiation region.

For both methods, once the portions of aligned tape are deposited, their cohesion with the substrate, or preceding layer, by consolidation, can be further enhanced by post processing. Post processing may be in the form of heating with a radiation source, for example, laser diode, infra-red laser, microwave source, ultrasonic source, etc. During such post processing, consolidation may benefit from simultaneous application of pressure.

Once the aligned tape layer is deposited, it is coated with a thermoplastic/resin substrate coating which is the host for the composite material. The whole process is repeated layer by layer to build the 3-dimensional component.

Alternatively, the aligned tape may be pre-impregnated with resin, to form either a prepreg. or partial prepreg., in order to overcome the need for the application of a resin layer.

A suitable laser for the LIFT process would be a Q-switched Nd:YAG laser, producing a laser energy of 100mJ or more. The precise values depend on the laser pulse length, area of aligned tape to be deposited using lift and support tape thickness. Smaller energies may also be suitable, in certain circumstances. Other types of pulsed lasers with similar laser parameters could also be used. Lasers with shorter pulse lengths, of the order of pico-seconds or femto-seconds could also be used.

According to a further aspect of the invention, following fabrication of the impregnated aligned tape, the material may be cut, chopped or otherwise segmented into particulates for further processing. Micromechanical calculations suggest that aligned CNT tapes having CNTs in the size range of 10 to 200 microns will provide substantial and increasing reinforcement effects. In this aspect the pre-impregnated aligned tape may be chopped into fine aligned particles in the above size range using a guillotine or milling or contactless process. It is possible that this latter process may be carried out in multiple stages, e.g., ∼5 mm long guillotined pieces processed to a finer particle size using milling or cryo-milling.

The resulting particles containing unidirectional arrays of CNT may then be processed as feed stock in a powder bed or other selective consolidation AM process. Prior to selective consolidation, the particles in a layer to be processed may be aligned in a desirable, unified direction with the application of an aligning influence, such as an ultrasonic field or local electric or magnetic field, prior to consolidation. The matrix material may, again, be a thermoplastic or a thermoset. In the case of the latter the heating source, e.g., laser, can be used to promote consolidation as well as cure.

The field may also be imposed to preferentially align and rotate the aligned particles in the X, Y and Z directions to attain tailored fibre reinforcement in desired directions, throughout the composite component.

For intermediate fibre lengths (>200 microns to mms), ferromagnetic (or other) markers may be deposited on the aligned tape at distances equivalent to the lengths of short fibres required. These markers will be used to aid the alignment of the fibres.

After stretching the tape, the CNTs become aligned. The aligned tape is then marked with a ferromagnetic material at intervals of desired fibre ribbon length. Marking could be done with any suitable ink deposition tool, such as an ink jet, extrusion nozzle. Marker dimensions may be off the order of 10-100 microns but may be smaller or larger. Marker sizes are optimised to provide suitable sensitivity to the markers and their movement through the resin binder. Thus their size is subject to the size, position and proximity of the magnetic field and to the viscosity of the resin. Once the aligned tape is marked, the fibre ribbons are sliced to a desired length.

For additive manufacture by the powder bed or other selective consolidation process, stock material may be made either by mixing dry unimpregnated fibre ribbons with resin, prior to deposition, or depositing a layer of resin and then depositing the dry fibre ribbons onto the resin. At this stage the fibre alignment of ribbons with respect to one another is random. A magnet is then passed over the resin/ribbon mix. The magnetic field interacts with the ferromagnetic dots and, as it passes over them, the dots are forced to move towards the magnet. Viscosity and surface tension of the resin prevent the fibre ribbons from leaving the resin and attaching themselves to the magnet (which in the absence of the resin they might do, with a strong enough magnet field). Furthermore the viscous drag from the resin on the fibre ribbons limits the movement of the ribbons to rotational movement, as if the tails of the ribbons were pinned.

The invention will now be described with reference to the accompanying drawings, of which:-
Figure 1 shows schematically apparatus according to the invention;
Figure 2 shows schematically aligned CNT tape being fed onto a work piece in a first direction by apparatus according to the invention;
Figure 3 shows schematically aligned CNT tape being fed onto a work piece in a second direction by apparatus according to the invention;
Figure 4a shows schematically a serpentine roller arrangement for stretching the CNT tape;
Figure 4b shows schematically an opposed roller arrangement for stretching CNT tape;
Figure 5a shows a CNT matt with the fibres randomly aligned;
Figure 5b shows a CNT matt with the fibres partially aligned;
Figure 5c shows a CNT matt with the fibres highly aligned;
Figures 6a and 6b show two types of supported tape for use according to the invention;
Figure 7a illustrates, schematically, apparatus for carrying out the LIFT process;
Figure 7b shows the result of a laser pulse striking a supported tape;
Figure 8 shows, in steps a) to e) layup of a carbon fibre reinforced composite component;
Figures 9 a) to e) show a sequence of steps according to the invention for transforming a UD array of CNT prepreg to a sintered array of aligned CNT composite;
Figure 10a shows the placing of ferromagnetic ink markers on aligned CNT tape;
Figure 10b shows particles of aligned CNT tape cut to a length corresponding to separation of ferromagnetic markers;
Figure 10c shows a layup of resin matrix material mixed with particles of aligned CNT tape before and after particle alignment, and
Figure 11 shows a layup of resin matrix material mixed with particles of aligned CNT tape before, during and after particle alignment.

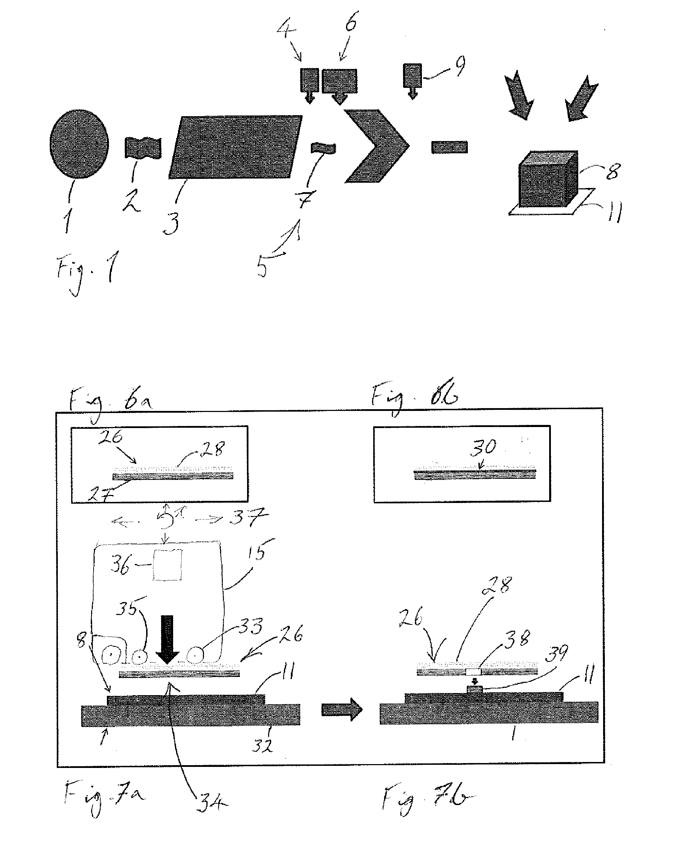

Referring to the drawings, Figure 1 shows, schematically, apparatus according to the invention. The apparatus comprises a source of CNT material in the form of a semi-infinite roll 1 of CNT tape 2. Such semi-infinite rolls include an ongoing source of tape being manufactured by known methods as it is being fed to the roll 1 for use in the manufacturing process.

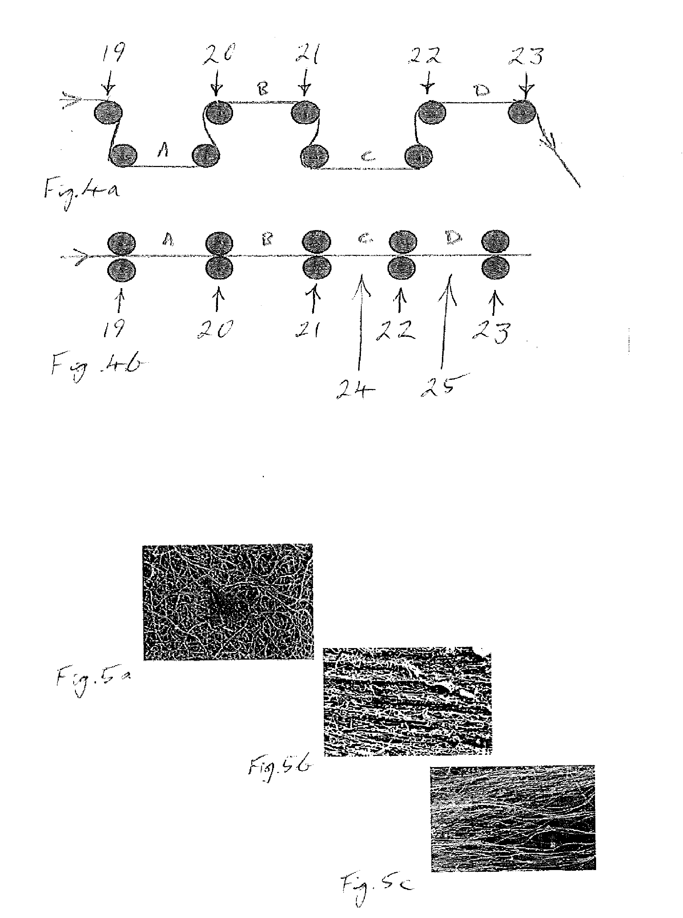

The tape 2 then enters a tape alignment stretching module 3, as further illustrated in Figures 4a and 4b. The alignment module 3 stretches the tape 2 in a controlled fashion to align the CNTs along the tape axis, as will be further described below.

When the aligned tape 2 leaves the alignment module 3 it is subject to surface treatment by plasma at a plasma treatment station 4. Such surface treatment assists impregnation of the tape 2 with matrix material.

At this stage, the tape 2 can also be treated with a metallic coating 7, if a layer for de-icing, for example or strain sensing or if an integrated antenna or frequency selective surface or selective electromagnetic/radar absorbing layer is required.

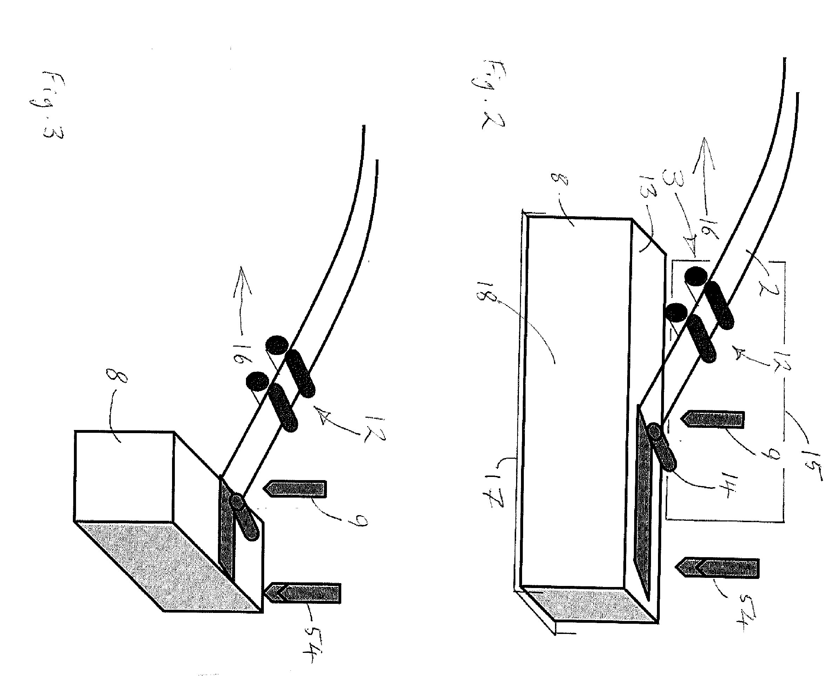

The aligned tape 2 next enters an impregnator, consolidator, feeder module 5 where liquid resin is sprayed onto the tape 2 from a resin applicator 6. The sprayed tape 2 is then rolled by one or more rollers, in a consolidator stage within the module 5, to more evenly impregnate the tape with resin. Next, the tape 2 can be either directly fed from a feed nozzle in the module 5 (not separately shown) onto a substrate 11 to commence fabrication of a component 8 layer by layer (see discussion of Figures 2 and 3, below) or the tape can be optionally marked and chopped into aligned particles 10, by a cutter/direct write marker 9, to be used as feed stock in a selective consolidation process such as a laser powder bed process.

In the case of component build on a substrate 11, further heat, pressure and additional resin may each be optionally applied to the CNT tape 2, during its laying onto the substrate. And, once laid, the tape 2 may be trimmed before a succeeding layer or layers are applied. It will be appreciated that if a tape 2, of say 5mm width, is used and the component is wider (or longer) than this, more than one width of tape will be required to cover a layer of the component. It is also within the scope of the invention to use tape sources of differing width, and indeed to mix types of tape, in order to build components which demand such design flexibility.

Turning now to Figures 2 and 3 of the drawings, CNT tape 2 is shown being fed through stretching/aligning/feeder rollers 12 (only shown schematically) of the alignment/stretching module 3 onto a top surface 13 of a component/work piece 8. Approximately at the point of contact between tape 2 and top surface 13, a consolidation roller or rollers 14 presses down on the tape 2 and top surface of the component 8 to assist consolidation of the tape into the component. The consolidation roller or rollers 14 may advantageously be quite soft and relatively large in diameter so as to evenly spread the consolidation load over the tape and top surface.

The stretching/aligning/feeder rollers 12 and consolidation roller(s) 14 are mounted in a deposition head 15 which also houses the tape cutter 9. Movement of the deposition head 15 relative to the component 8 is in the direction of arrow 16, during layup of the tape 2. It will be appreciated that this relative movement may be achieved by moving the head 15, the component 8 or both. The double arrow 54 represents a heat or other energy source.

In this embodiment, the work piece 8 is mounted on a 5-axis manipulator 17 which will allow layup of plies of tape 2 on any one of the faces 18 of the component and in any desired direction. Figure 3 shows the tape 2 being laid up across the component 8, rather than along it, to form a component 8 with a multiaxial layup of tape plies. Such a layup would be suitable for use in high strength applications, such as aircraft structural components.

Figures 4a and 4b schematically show alternative roller arrangements for the alignment/stretching module 3. In Figure 4a, roller pairs 19, 20, 21, 22, 23 use their serpentine nature to achieve the required friction to pull the tape 2 through the roller set and stretch the tape. Through each stage, A, B, C and D, the tape is progressively stretched more at each stage. As an example, here 5% at A, 10% at B, 10% at C and 10% at D is achieved. Thus approximately 40% overall tape stretch is achieved, through all sets.

In Figure 4b, the same stretch is achieved but with opposed pairs of rollers creating the friction to pull and stretch the tape instead of serpentine pairs. At 24 surface treatment in the form of the application of plasma is carried out on the tape 2 and at 25, resin is applied to the tape.

Figure 5a shows a CNT mat with the fibres randomly aligned, as might be the case entering roller set 19 of Figures 4a and 4b. Figure 5b shows a CNT mat with the fibres partially aligned, as might be the case between roller sets 21 and 22 of Figures 4 and 4b. Figure 5c shows a CNT mat with the fibres highly aligned, as might be the case for the tape 2 leaving rollers 23, in Figures 4a and 4b.

Figures 6a and 6b show two types of supported tape, according to the invention. Figure 6a shows a supported tape 26 comprising aligned tape 27 supported on backing tape 28. Figure 6b shows an alternative type of supported tape 29 comprising aligned tape 27, backing tape 28 with a layer of contaminant 30 interposed therebetween.

Referring to Figures 7a and 7b, apparatus for carrying out the LIFT process comprises a deposition head 15 and a base plate 32 onto which a thermoplastic substrate 11 is laid. The apparatus is for use with aligned and supported tape 26. The head 15 may include a feed spool of tape 33, feeding supported tape past a deposition region 34 to a collection spool 35 for the backing tape 28 and any remaining aligned tape 27 attached to the backing tape. The head 15 may also include a Q-switched Nd:YAG pulse laser 36 and means to move the direction of laser focus with respect to the tape. The work piece or component 8 may also be movable with respect to the aligned tape, for example, laterally and/or longitudinally of the tape and rotationally with respect to the tape (here indicated by directional arrows 37).

The supported tape 26 is placed in close proximity to the substrate 11, for example in the range of 10s of microns to 500 microns, with the aligned tape 27 facing the substrate. A laser pulse is then discharged to irradiate a small region 38 of the supported tape 26. In the irradiated region 38, the laser pulse causes a portion 39 of the aligned tape to be lifted off the backing tape 28 and projected onto the substrate 11. The process is then repeated with the laser 36 being directed at a fresh portion of the tape 26 until all usable aligned tape in a given region thereof has been used up and a fresh region is exposed to the laser 36 to be progressively projected onto the substrate 11.

Referring now to Figure 7a, in an alternative method, no backing tape 28 is used. Instead, unsupported aligned tape 27 is fed from feed spool 33 across the deposition region 34 to collection spool 35. It is fed to a position contacting the substrate 11 (or very close to it); it is then irradiated with laser pulses, as in figure 7b, causing irradiated parts 38 of the tape to be cut and deposited on the substrate 11. In order to allow for the aligned tape 27 losing much of its material, following deposition of irradiated regions 38 of the tape, the aligned tape is pushed as well as well as pulled across the deposition region 34 by feed spool 33 and collection spool 35, respectively. Clearly, this is a delicate operation and the speeds of spools 33 and 35 must therefore be very carefully matched to one another, in order to avoid either bunching or stretching of the aligned tape 27.

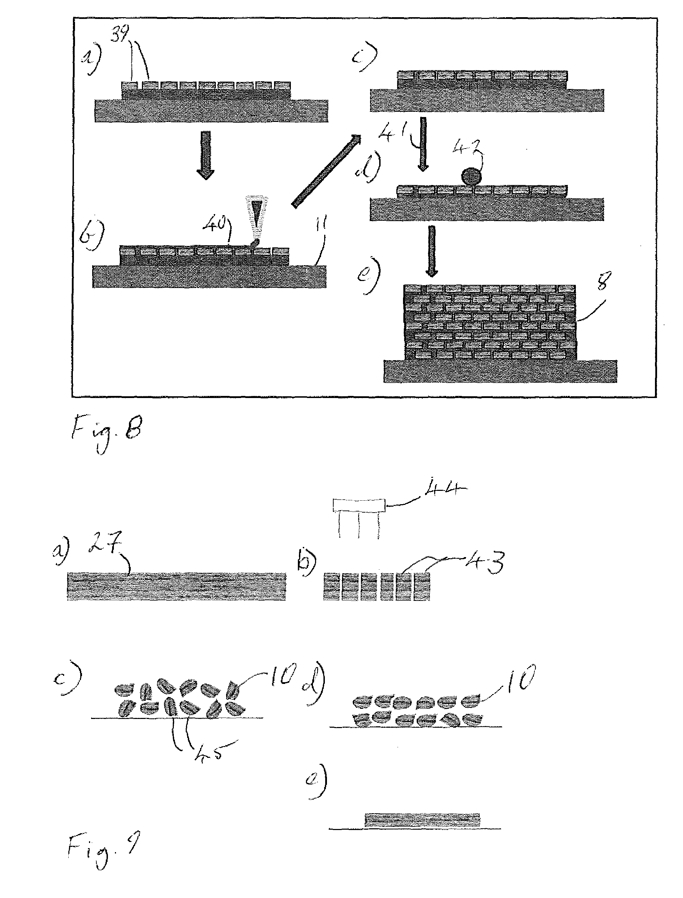

For both methods, once the portions 39 of aligned tape are deposited, see Figure 8a, and a layer of thermoplastic/resin substrate 40 has been applied, see Figure 8b, their cohesion with the substrate 11, or preceding layer, by consolidation, is further enhanced by post processing, see Figures 8c and 8d. A radiation source, here an infra-red laser 41, is used for post processing. During post processing, consolidation benefits from the simultaneous application of pressure from roller 42.

The whole process is repeated layer by layer to build the 3-dimensional component 8, see Figure 8e.

Referring to Figures 9a to 9e, following fabrication of the impregnated aligned tape 27, the material is chopped into fine aligned particles or ribbons 43 for further processing, using a guillotine 44, see figure 9b. The particles 43 are then processed as feed stock 45, see figure 9c, in a powder bed process (not separately shown). Prior to selective consolidation, the particles 43 in a layer to be processed are aligned, as shown in figure 9d, in a desirable, unified direction with the application of a magnetic field, prior to consolidation, as shown in Figure 9e.

The field may be imposed to preferentially align and rotate the aligned particles 43 in the X, Y and Z directions to attain tailored fibre reinforcement in desired directions, throughout the composite component.

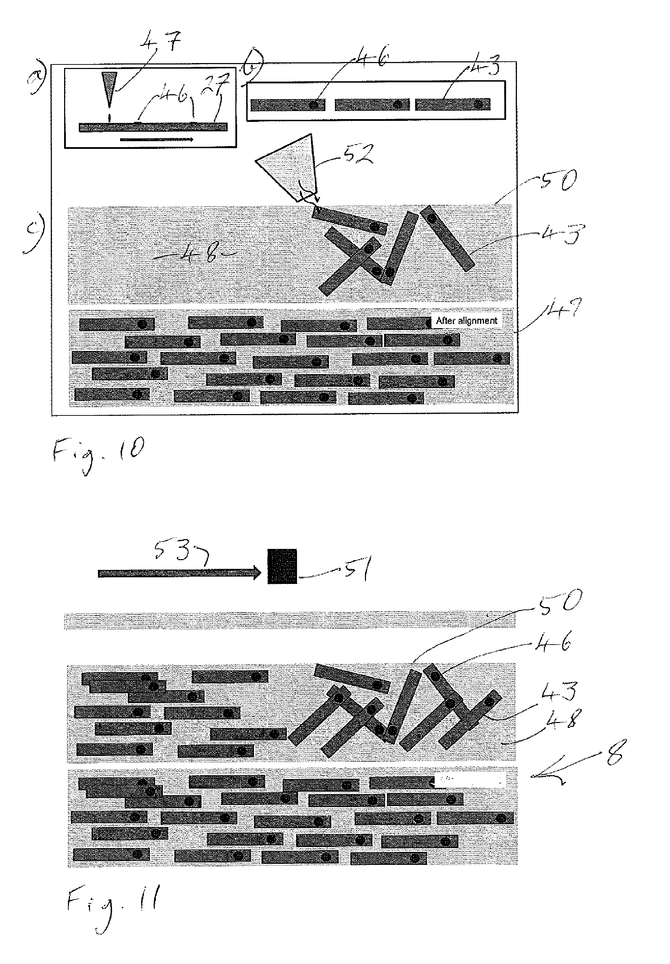

Referring to Figures 10 and 11, for intermediate fibre lengths, in the range, >200 microns to mms, ferromagnetic markers 46 are deposited from an extrusion nozzle 47 onto the aligned tape 27 at distances equivalent to the lengths of particles, or "ribbons" 43 required. These markers 46 will be used to aid the alignment of the fibres in the preferred load path direction. Marker sizes are optimised to provide suitable sensitivity, to enable their movement through a resin binder 48. Thus their size is subject to the size, position and proximity of the magnetic field and to the viscosity of the resin 48.

Once the aligned tape 27 is marked, the tape is spliced into ribbons 43 of desired length, see Figure 10b.

Referring to Figure 10c, for additive manufacture by the powder nozzle fed process, feed stock 45 is made by depositing a layer 50 of resin 48 upon an underlying layer 49 and then depositing dry fibre ribbons 43 from a hopper 52 onto the resin layer 50, see Figure 10c. At this stage the fibre alignment of ribbons 43 with respect to one another and to the component is random.

Referring to figure 11, a magnet 51 is then passed over the resin/ribbon mix 48, 43. The magnetic field from the magnet interacts with the ferromagnetic markers 46 and, as the magnet passes over them, the markers are forced to move towards the magnet 51, into the direction of arrow 53. Viscosity and surface tension of the resin 48 prevent the ribbons 43 from leaving the resin 48 and attaching themselves to the magnet 51 (which in the absence of the resin they might do, with a strong enough magnet field). Furthermore the viscous drag from the resin 48 on the ribbons 43 limits the movement of the ribbons to rotational movement.

With the ribbons 43 aligned to a desired direction, within the resin layer 50, the layer can be consolidated and post processed, as described earlier, to form a new consolidated layer of the component 8. It will be appreciated that the direction of ribbon orientation can be altered, layer 50 by layer, and even in the midst of a layer, one or more times, if the component design requires it.

## Claims

1. A method of forming a composite component by additive layer manufacturing, the method including the steps of providing an elongate tape of carbon nanotubes (CNTs), applying stretching force to the tape whereby to align the carbon nanotubes to the tape and form an aligned tape, impregnating the tape with matrix material, forming the aligned tape into portions of required size and transferring the portions as required to a component build location whereby to form the component, layer by layer.

2. A method according to claim 1, including the step of impregnating the aligned tape with matrix material and wherein transferring the portions as required to a component build location whereby to form the component, layer by layer, includes the steps of depositing the portions on a substrate to form a layer and thereafter depositing further portions as a series of further layers, each layer being of a cross sectional shape corresponding to that of the component, and heating and consolidating the deposited tape as required whereby to form the component.

3. A method according to any preceding claim, including controlling the direction of deposition of the portions of tape, with respect to the substrate, whereby to create layers exhibiting alignment of CNTs in varying respective directions, as required.

4. A method according to any preceding claim, in which the tape is impregnated with a thermoplastic resin matrix material.

5. A method according to claim 4, in which the portions of tape are heated during the deposition step.

6. A method according to any preceding claim, including the step of selectively depositing at least one conductive pattern onto at least one of the substrate and a deposited layer.

7. A method according to any preceding claim, including the step of providing additional deposition means whereby to manufacture alternative structure for the component during forming of the component.

8. A method according to claim 1, in which the step of impregnating the tape with matrix material comprises impregnating the aligned tape and in which the steps of forming the aligned tape into portions of required size and transferring the portions as required to a component build location whereby to form the component, layer by layer, include chopping the aligned tape into aligned particles of length at least substantially 10µm, transferring the aligned particles to a selective consolidation additive layer manufacturing apparatus whereby the aligned particles lie in a loose collection having a treatable region thereof defining a treatable surface,
(i) subjecting the treatable region to an aligning influence whereby to align the aligned particles such that the CNTs become aligned in a predetermined direction;
(ii) applying a heating and optional curing step to the treatable region whereby to fuse the aligned particles of the treatable region together to form a said layer of the component,
providing a further treatable region of aligned particles adjacent the layer and repeating steps (i) and (ii) as required whereby to form the component layer by layer.

9. A method according to claim 8, in which the aligning influence comprises at least one of ultrasonic agitation, an electric field and a magnetic field.

10. A method according to claim 8 or 9, in which for each layer step (i) is performed to align the CNTs to one of a number of directions, in the X, Y and Z planes in order to tailor fibre reinforcement to design requirements for the component.

11. A method according to claim 1, including marking the aligned tape with a marker material sensitive to a magnetic field at length intervals corresponding to the desired length of the aligned particles, chopping the aligned tape into aligned particles of length at least substantially 200µm each with a marker near to one end thereof, impregnating the aligned particles with matrix material, transferring the aligned particles to a selective conditioning additive layer manufacturing apparatus whereby the aligned particles lie in a loose collection having a treatable region thereof defining a treatable surface,
(i) subjecting the treatable region to a magnetic field whereby the said field interacts with the markers and rotates the marked particles to a common orientation such that the CNTs become aligned in a predetermined direction;
(ii) applying a heating and optional curing step to the treatable region whereby to fuse the aligned particles of the treatable region together to form a said layer of the component,
providing a further treatable region of aligned particles adjacent the layer and repeating steps (i) and (ii) as required whereby to form the component layer by layer.

12. A method according to claim 1, in which the steps of forming the aligned tape into portions of required size and transferring the portions as required to a component build location whereby to form the component, layer by layer comprise placing the aligned tape on or in close proximity to the substrate or succeeding layer, irradiating a portion of aligned tape of required size with a laser pulse whereby to remove from the tape a said portion of corresponding size and deposit said portion on the substrate.

13. A method according to claim 12, including the step of attaching the aligned tape to a supporting backing tape whereby to form a supported tape arranged with the aligned tape facing the substrate and wherein the step of irradiating a portion of aligned tape of required size with a laser pulse whereby to remove from the tape a said portion of corresponding size causes a portion of the aligned tape to be lifted off the backing tape and projected onto the substrate.

14. A method according to any preceding claim, in which the component is formed as a structural aircraft component.

15. Apparatus for forming a composite component by additive layer manufacturing, the apparatus including a deposition head to deposit tape of carbon nanotubes (CNTs) feed means for feeding an elongate tape of carbon nanotubes (CNTs), tape stretching means to apply stretching force to the tape whereby to align the carbon nanotubes to the tape and form an aligned tape, impregnation means to impregnate the tape with matrix material, means to form the aligned tape into portions of required size and transfer means to transfer the portions as required to a component build location whereby to form the component, layer by layer.
